# DEMANDE DE BREVET EUROPEEN

(11) **EP 0 597 159 A1**
(43) Date de publication de la demande: **18.05.1994**
(21) Numéro de dépôt: 92403044.8
(22) Date de dépôt: 10.11.1992
(51) Int. Cl.: G05D 1/00, G05D 3/14, F16K 37/00, F16K 31/04

(54) **Dispositif de régulation d'une électrovanne et son utilisation**

(71) Demandeur: SOCIETE CIVILE COFINAGRI, F-59251 Allennes-les-Marais (FR); Kerbrat, Renaud, F-14610 Thaon Epron (FR)
(72) Inventeur: Kerbrat, Renaud, F-14610 Thaon Epron (FR)
(74) Mandataire: De Palmenaer, Roger

(57) **Abrégé**

Dispositif de régulation pour une électrovanne, ce dispositif comprenant un moteur (9), des potentiomètres rotatifs (4,5,6) de commande de l'électrovanne et dont l'arbre (55) porte une roue (56), et un moyen (7) permettant l'entraînement des roues des potentiomètres (4,5,6) par le moteur (9). La vitesse de rotation de l'arbre (55) d'un premier potentiomètre (4) est au moins deux fois supérieure à celle de l'arbre (55) d'un deuxième potentiomètre (6) , de sorte que grâce à un moyen de sélection, l'électrovanne peut être commandée soit par le premier potentiomètre (4), soit par le deuxième potentiomètre (6).

## Description

La présente invention a pour objet un dispositif de régulation pour une électrovanne, en particulier par radio-commande, permettant une grande fiabilité, ainsi qu'une grande précision de commande.

On connaît des machines à chenilles munies d'un bras commandé par un vérin. Le déplacement du piston de ce vérin est commandé par un système digital . Les vibrations, les conditions d'utilisation particulièrement sévères (carrière, mine, etc), la poussière, les chocs, etc. ne permettent pas à ces systèmes d'être fiables et induisent des erreurs de commande ou de déplacement du piston.

Dû à ces conditions de travail difficiles, et dès lors aux erreurs de commande, les mouvements du bras ne peuvent pas être commandés de manière précise.

La présente invention vise à remédier à ces inconvénients et à permettre la régulation d'une électrovanne d'une manière grossière lorsque des mouvements peu précis sont requis et d'une manière fine ou extra fine lorsque des mouvements de grande précision sont requis par exemple pour retirer des charges non explosées de trous de mine.

Le dispositif de régulation pour électrovanne suivant l'invention comprend :
(a) un moteur recevant des informations de commande d'un système,
(b) au moins deux potentiomètres rotatifs de commande de l'électrovanne , dont l'arbre porte une roue et dont les arbres sont destinés à être connectés à un moyen de sélection du potentiomètre commandant l'électrovanne, et
(c) un moyen permettant l'entraînement des arbres des potentiomètres rotatifs.

L'arbre de chaque potentiomètre porte une roue entraînée en rotation par le moyen d'entraînement. Les roues des potentiomètres et ledit moyen d'entraînement sont adaptés, agencés ou de forme telle, de manière à ce que la vitesse de rotation de l'arbre d'un premier potentiomètre soit au moins deux fois supérieure à la vitesse de rotation de l'axe du deuxième potentiomètre. Ainsi, grâce au moyen de sélection du potentiomètre l'électrovanne peut être commandée soit par le premier potentiomètre, soit par le deuxième potentiomètre.

De façon avantageuse, les roues et le moyen d'entraînement sont agencés ou adaptés de manière à ce que la vitesse de rotation de l'arbre d'un premier potentiomètre soit au moins 5 fois, de préférence 10 fois supérieure à la vitesse de rotation de l'arbre du deuxième potentiomètre.

Dans une forme de réalisation, l'arbre desdits premier et deuxième potentiomètres porte une roue entraînée en rotation par le moyen d'entraînement, le diamètre de la roue du deuxième potentiomètre étant supérieur au diamètre de la roue du premier potentiomètre.

Le moyen d'entraînement est par exemple une courroie, une chaîne, etc mais est de préférence un disque ou roue, avantageusement denté.

Dans une forme de réalisation, le disque comporte au moins deux parties de diamètre différent. Une première partie destinée à entraîner en rotation l'arbre d'un potentiomètre a un diamètre inférieur au diamètre de l'autre partie destinée à entraîner l'arbre de l'autre potentiomètre.

Selon une particularité du dispositif suivant l'invention, il comporte un potentiomètre rotatif dont l'arbre est entraîné par le moteur via un moyen d'entraînement, de préférence le moyen d'entraînement des arbres des potentiomètres de commande de l'électrovanne. Ce potentiomètre envoie des informations vers le système de commande du moteur, de manière à assurer que la vitesse de rotation du moteur correspond sensiblement à la vitesse de rotation désirée du moteur.

Selon une autre particularité d'un dispositif suivant l'invention, il comporte au moins trois potentiomètres rotatifs de commande de l'électrovanne. Ces potentiomètres présentent chacun un arbre portant une roue entraînée en rotation par le moyen d'entraînement. Lesdites roues et ledit moyen étant adaptés de manière à ce que le rapport vitesse de rotation de l'arbre du 2^{ème} potentiomètre/vitesse de rotation de l'arbre du 3^{ème} potentiomètre soit supérieur à 2, de préférence à 5, et à ce que le rapport vitesse de rotation de l'arbre du 1 ^{er} potentiomètre/vitesse de rotation de l'arbre du 3eme potentiomètre soit supérieur au rapport vitesse de rotation de l'arbre du 2^{ème} potentiomètre/vitesse de rotation de l'arbre du 3eme potentiomètre, et est, de préférence, supérieur ou égal à 10.

Selon une forme de réalisation préférée, le dispositif comprend :
a) un disque entraîné en rotation par le moteur et portant un ou plusieurs moyens de repérage de positions du disque,
b) au moins un moyen de détection des moyens de repérage destiné à être connecté à un moyen de détection de la rotation réellement effectuée du disque.

La présente invention a encore pour objet un ensemble de régulation pour une électrovanne, cet ensemble comprenant un dispositif suivant l'invention.

Cet ensemble comprend avantageusement en outre :
- un système de réception de signaux, en particulier de signaux radio pour commander le moteur et/ou
- un moyen de sélection du potentiomètre pour commander l'électrovanne, cedit moyen comprenant avantageusement un organe de sélection commandé par le système de réception de signaux et éventuellement par un moyen de contrôle de l'électrovanne et/ou de l'élément commandé par l'électrovanne, et/ou
- un dispositif de sécurité destiné, en cas de défaut d'un potentiomètre, à permettre l'utilisation d'un autre potentiomètre malgré la sélection dudit potentiomètre défectueux par le moyen de sélection, et/ou
- un moyen de temporisation destiné en cas de sélection d'un potentiomètre à assurer pendant une période de temps déterminée l'utilisation d'un potentiomètre dont l'arbre a une vitesse de rotation plus importante que celle de l'arbre du potentiomètre sélectionné pour la commande de l'électrovanne.

Enfin, la présente invention a encore pour objet une machine comprenant un élément commandé par une électrovanne, cette dernière étant commandée par un ensemble suivant l'invention, et l'utilisation d'un dispositif suivant l'invention pour commander une électrovanne de commande d'un élément d'une machine.

D'autres particularités et détails de l'invention ressortiront de la description détaillée suivante dans laquelle il est fait référence aux dessins ci- annexes.

Dans ces dessins :
- la figure 1 est une vue schématique d'une machine munie d'un dipositif suivant l'invention ;
- la figure 2 est une vue en perspective d'un dispositif suivant l'invention ;
- la figure 3 est une vue avant du dispositif représenté à la figure 2, et
- la figure 4 est une vue éclatée en perspective du dispositif représenté à la figure 2.

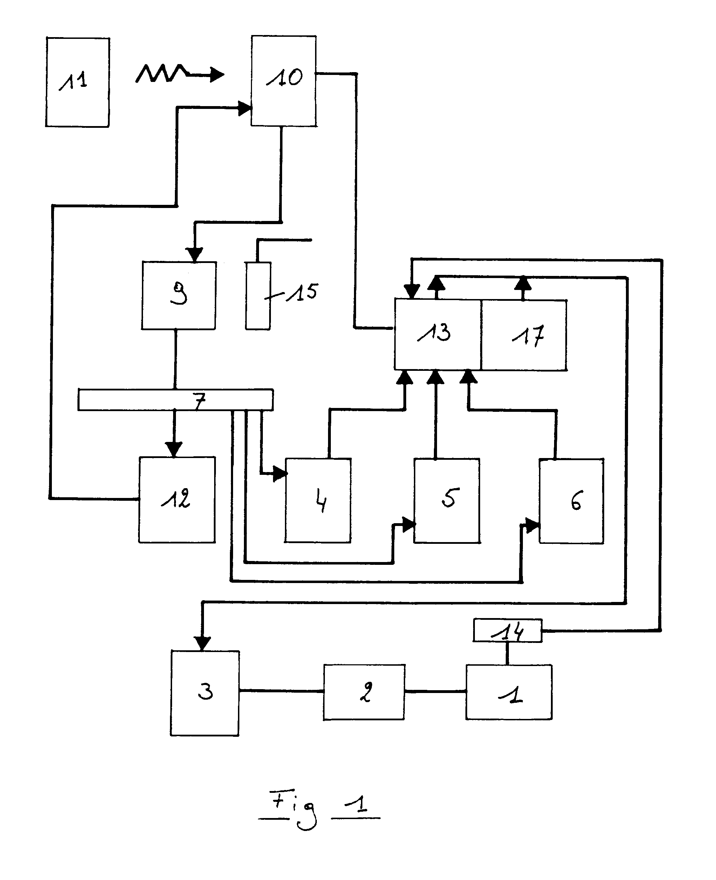

La figure 1 représente schématiquement une machine munie d'un dispositif suivant l'invention.

Cette machine comprend un élément 1 dont le mouvement est actionné par un vérin 2 monté dans un circuit hydraulique dont le flux de liquide hydraulique est réglé par une électrovanne 3. Cette électrovanne 3 est commandée par un potentiomètre rotatif choisi parmi un potentiomètre rotatif 4 à 1 tour (c'est-à-dire 1/2 tour pour la mesure d'un potentiel positif et 1/2 tour pour la mesure d'un potentiel négatif), un potentiomètre 5 à 5 tours (2,5 tours pour des potentiels positifs et 2,5 tours pour des potentiels négatifs) et un potentiomètre 6 à 10 tours (5 tours pour des potentiels positifs et 5 tours pour des potentiels négatifs).

Les potentiomètres 4,5,6 présentent un arbre sur lequel est montée une roue entraînée en rotation par un disque 7. Le potentiomètre 4 à 10 tours est d'une plus grande précision que le potentiomètre 5 à 5 tours, ce dernier étant plus précis que le potentiomètre 6 à 1 tour. Le disque 7 est monté sur l'arbre 8 d'un moteur 9 commandé par un système 10 comprenant des moyens de réception d'informations émises par un émetteur 11, par exemple un émetteur d'onde radio.

Le disque 7 entraîne en rotation la roue d'un potentiomètre rotatif 12 qui envoie des informations vers le système 10 de manière à s'assurer que la vitesse de rotation du moteur 9 correspond à la vitesse de rotation désirée du moteur.

Un moyen 13 de sélection du potentiomètre ou d'un organe de celui-ci devant commander l'électrovanne est commandé par le système 10 et donc par l'émetteur 11. Enfin, un moyen de contrôle 14 du déplacement de l'élément 1 agit sur le moyen 13 de sorte que lorsque l'élément 1 est proche de sa position déterminée, le potentiomètre 6 à 10 tours est sélectionné par le moyen 13.

En cas de défectuosité d'un potentiomètre, un dispositif de sécurité 17 permet, par exemple par une commutation, l'utilisation d'un potentiomètre non défectueux malgré la sélection par l'émetteur 11 du potentiomètre défectueux.

Le moyen de sélection 13 comprend ou est associé à un moyen de temporisation destiné en cas de sélection d'un potentiomètre à assurer pendant une période de temps déterminée (par exemple 1 à 5 secondes) l'utilisation du potentiomètre 4 à 10 trous pour commander l'électrovanne 3.

De façon avantageuse, un disque entraîné en rotation par le moteur porte des repères ou moyens de repérage. Un moyen de détection 15 de la rotation réellement effectuée du disque permet de reprendre des mesures sous forme digitale, mais permet aussi d'étalonner les potentiomètres.

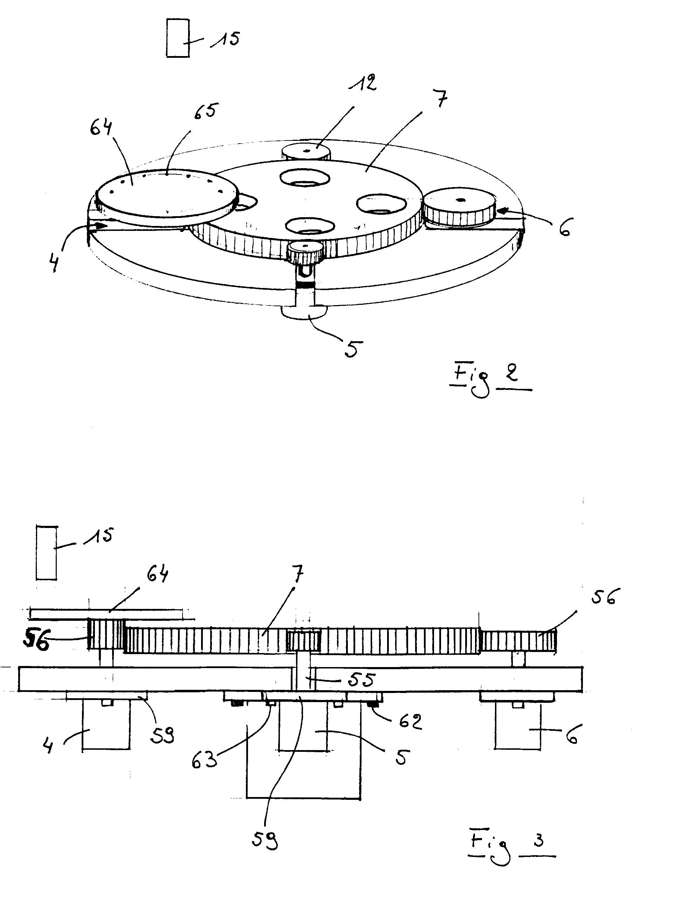

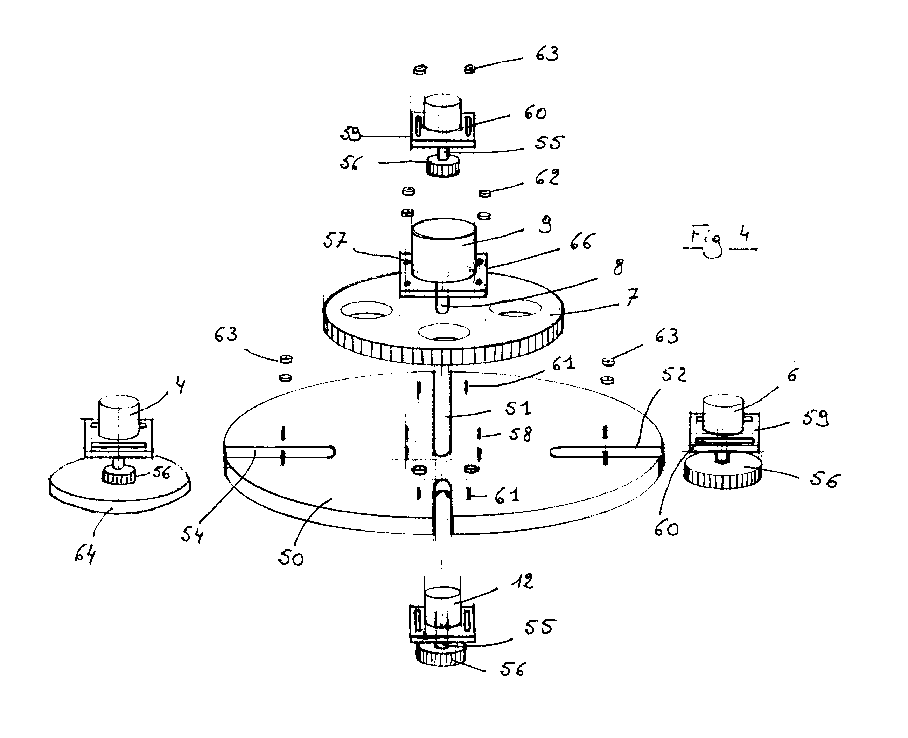

Les figures 2 à 4 représentent un dispositif suivant l'invention. Ce dispositif comprend une plaque support circulaire 50 présentant quatre fentes 51, 52, 53,54 s'étendant radialement depuis un bord de la plaque circulaire. Une fente 51 s'étend jusqu'au centre de la plaque 50. L'ouverture centrale livre passage à l'arbre 8 du moteur 9 portant le disque 7.

Ces fentes permettent par simple glissement l'introduction des arbres 55,8 des potentiomètres 4,5,6,12 et du moteur et permettent également de régler par simple glissement le positionnement des roues 56 portées par les arbres des potentiomètres 4,5,6,12 par rapport à la roue ou disque 7. Les diamètres des potentiomètres4,5,6 de commande de l'électrovanne 3 sont tels que leurs rapports par rapport au diamètre de la roue du potentiomètre 12 de contrôle du moteur 9 soient respectivement :
1 (0 potentiomètre 4/0 potentiomètre 12)
5 (0 potentiomètre 5/0 potentiomètre 12)
et 10 (0 potentiomètre 6/0 potentiomètre 12).

Ces rapports peuvent varier dans des cas d'application particuliers, ainsi le rapport 0 potentiomètre 6/0 potentiomètre 4 ou 12 peut atteindre 50, voire plus.

Le moteur 9 est solidaire d'une plaque 66 de forme carrée présentant à ses quatre coins des orifices 57 destinés à livrer passage à des tiges 58 solidaires de la plaque 50 et dont les extrémités libres sont taraudées. La fixation du moteur 9 sur la plaque 50 est alors réalisée au moyen d'écrous 62 vissés sur lesdites extrémités libres taraudé es

Les potentiomètres 4,5,6 et 12 sont montés sur des plaques 59 présentant deux fentes 60 parallèles entre elles. Des tiges 61 solidaires de la plaque support 50 sont situées de part et d'autre des fentes radiales 51,52,53,54 de la plaque 50. Ces tiges 61 présentent des extrémités filetées. Après l'engagement des tiges 61 dans les fentes 60, le positionnement des roues des potentiomètres 4,5,6,12 peut être effectué par simple glissement. Le maintien en place des potentiomètres est alors réalisé au moyen d'écrous 63. Ceci permet de régler à volonté la distance séparant l'arbre 8 du moteur de l'arbre 55 d'un potentiomètre.

Les roues 56 et 7 sont avantageusement dentées. Les dents de la roue 7 étant engagées dans des espaces situés entre deux dents des roues 56.

Un disque 64 est monté sur l'arbre du potentiomètre 6. Ce disque porte une série de repères 65 destinés à être lus par un moyen de détection 15.

## Revendications

1. Dispositif de régulation pour une électrovanne (3), ce dispositif comprenant :
a) un moteur (9) recevant des informations de commande d'un système (10),
b) au moins deux potentiomètres rotatifs (4,5,6) de commande de l'électrovanne (3) et dont l'arbre (55) porte une roue (56), lesdits potentiomètres étant destinés à être connectés à un moyen de sélection (13) du potentiomètre (4,5,6) commandant l'électrovanne, et
c) un moyen (7) permettant l'entraînement des roues desdits potentiomètres (4,5,6) par le moteur (9), lesdites roues et ledit moyen (7) étant adaptés ou agencés de manière à ce que la vitesse de rotation de l'arbre (55) d'un premier potentiomètre (4) soit au moins deux fois supérieure à la vitesse de rotation de l'arbre du deuxième potentiomètre (6), de sorte que grâce au moyen de sélection (13) du potentiomètre, l'électrovanne (3) peut être commandée soit par le premier potentiomètre (4), soit par le deuxième potentiomètre (6).

2. Dispositif suivant la revendication 1, caractérisé en ce que lesdites roues (56) et ledit moyen d'entraînement (7) sont adaptés ou agencés de manière à ce que la vitesse de rotation de l'arbre d'un premier potentiomètre (4) soit au moins 5 fois, de préférence 10 fois supérieure à la vitesse de rotation de l'arbre du deuxième potentiomètre.

3. Dispositif suivant la revendication 1 ou 2, caractérisé en ce que l'arbre desdits premier (4) et deuxième (6) potentiomètres porte une roue (56) entraînée en rotation par le moyen d'entraînement (7), le diamètre de la roue du deuxième potentiomètre (6) étant supérieur au diamètre de la roue du premier potentiomètre (4).

4. Dispositif suivant l'une quelconque des revendications précédentes, caractérisé en ce que le moyen d'entraînement comporte au moins une courroie ou une chaîne ou un disque, de préférence denté.

5. Dispositif suivant la revendication 4, caractérisé en ce que le disque comporte au moins deux parties de diamètre différent, une première partie dont le diamètre est inférieur au diamètre de l'autre partie entraînant en rotation l'arbre d'un premier potentiomètre (6), tandis que la deuxième partie entraîne en rotation l'arbre du deuxième potentiomètre (4).

6. Dispositif suivant l'une quelconque des revendications 1 à 5, caractérisé en ce qu'il comporte un potentiomètre rotatif (12) dont l'arbre est entraîné en rotation par le moteur via un moyen d'entraînement (7), ledit potentiomètre envoyant des informations vers le système de commande (10) du moteur (9) de manière à assurer que la vitesse de rotation du moteur correspond sensiblement à la vitesse de rotation désirée du moteur.

7. Dispositif suivant l'une quelconque des revendications 1 à 6, caractérisé en ce qu'il comporte au moins trois potentiomètres rotatifs (4,5,6) entraînés en rotation par ledit moyen d'entraînement (7) et présentant chacun un arbre portant une roue (56), lesdites roues et ledit moyen étant agencés ou adaptés de manière à ce que le rapport entre la vitesse de rotation de l'arbre du deuxième potentiomètre (5) et la vitesse de rotation de l'arbre du troisième potentiomètre (6) est supérieur à 2, de préférence à environ 5, tandis que le rapport entre la vitesse de rotation de l'arbre du premier potentiomètre (4) et la vitesse de rotation de l'arbre du troisième potentiomètre (6) est supérieur au rapport entre la vitesse de rotation de l'arbre du deuxième potentiomètre (5) et la vitesse de rotation de l'arbre du troisième potentiomètre (6) et est de préférence supérieur ou égal à 10.

8. Dispositif suivant l'une quelconque des revendications 1 à 7, caractérisé en ce qu'il comprend un disque (64) entraîné en rotation par le moteur (9), éventuellement via un système d'entraînement, ce disque portant un, de préférence, plusieurs moyens de repérage ou repères (65) de positions du disque (64), et au moins un moyen de détection (15) des moyens de repérage ou repères (65).

9. Dispositif suivant l'une quelconque des revendications 1 à 8, caractérisé en ce qu'il comprend une plaque support (50) présentant, d'une part, une ouverture livrant passage à l'arbre (8) du moteur (9), ledit arbre (8) portant un disque denté (7), et d'autre part, une série de fentes (51,52,53,54) destinées chacune à livrer passage à l'arbre (55) d'un potentiomètre (4,5,6,12), ledit arbre (55) de chacun desdits potentiomètres portant une roue dentée (56) engrenant avec le disque denté (7).

10. Dispositif suivant la revendication 9, caractérisé en ce que les fentes s'étendent depuis un bord de la plaque support (50) de manière à permettre d'introduire l'arbre (55) d'un potentiomètre par glissement.

11. Dispositif suivant la revendication 10, caractérisé en ce qu'une fente (51) s'étend depuis un bord de la plaque support (50) jusqu'à l'ouverture livrant passage à l'arbre (8) du moteur (9) de manière à permettrre l'introduction de l'arbre (8) par glissement.

12. Dispositif suivant la revendication 10 ou 11, caractérisé en ce qu'au moins un potentiomètre est monté sur une pièce (59) présentant deux fentes (60) parallèles entre elles, chacune desdites fentes (60) étant destinée à livrer passage à une tige (61) solidaire de la plaque support (50) de manière à permettre de régler la distance séparant l'arbre (8) du moteur (9) de l'arbre (55) du potentiomètre.

13. Ensemble de régulation pour électrovanne, caractérisé en ce qu'il comprend au moins un dispositif suivant l'une quelconque des revendications 1 à 12.

14. Ensemble suivant la revendication 13, caractérisé en ce qu'il comprend un système de réception de signaux, en particulier de signaux radio, pour commander le moteur (9).

15. Ensemble suivant la revendication 13 ou 14, caractérisé en ce qu'il comprend un moyen de sélection (13) du potentiomètre pour commander l'électrovanne (3).

16. Ensemble suivant la revendication 15, caractérisé en ce que le moyen de sélection (13) comprend un organe de sélection commandé par le système de réception de signaux (10) et éventuellement par un moyen de contrôle de l'électrovanne (3) et/ou d'un élément (1) commandé par l'électrovanne (3).

17. Ensemble suivant l'une quelconque des revendications 13 à 16, caractérisé en ce qu'il comprend un dispositif de sécurité (17) destiné, en cas de défaut d'un potentiomètre, à permettre l'utilisation d'un autre potentiomètre malgré la sélection du potentiomètre défectueux par ledit moyen de sélection (13).

18. Ensemble suivant l'une quelconque des revendications 13 à 17, caractérisé en ce qu'il comprend un moyen de temporisation destiné en cas de sélection d'un nouveau potentiomètre de commande à assurer pendant une période de temps déterminée l'utilisation d'un potentiomètre dont l'arbre a une vitesse de rotation plus importante que celle de l'arbre du potentiomètre sélectionné pour commander l'électrovanne (3).

19. Machine comprenant un élément (1) commandé par une électrovanne, cette dernière étant commandée par un ensemble suivant l'une quelconque des revendications 13 à 18.

20. Utilisation d'un dispositif suivant l'une quelconque des revendications 1 à 12 pour commander une électrovanne (3) de commande d'un élément d'une machine.
